# EUROPÄISCHE PATENTSCHRIFT

(11) **EP 3 571 758 B1**
(45) Veröffentlichungstag und Bekanntmachung des Hinweises auf die Patenterteilung: **30.12.2020**
(21) Anmeldenummer: 18704424.3
(22) Anmeldetag: 23.01.2018
(51) Int. Cl.: H02M 7/487

(54) **MODULARER WECHSELRICHTER**
MODULAR INVERTER
ONDULEUR MODULAIRE

(30) Priorität: 28.02.2017 DE 102017203233
(43) Veröffentlichungstag der Anmeldung: 27.11.2019
(73) Patentinhaber: Siemens Aktiengesellschaft, 80333 München (DE)
(72) Erfinder: MONDAL, Gopal, 91058 Erlangen (DE)
(86) Internationale Anmeldenummer: PCT/EP2018/051512
(87) Internationale Veröffentlichungsnummer: WO 2018/158005

(56) Entgegenhaltungen:
- DE-U1-202011 102 068
- US-A1- 2013 301 314
- CORZINE K A ET AL: "ANALYSIS OF A NOVEL FOUR-LEVEL DC/DC BOOST CONVERTER", CONFERENCE RECORD OF THE 1999 IEEE INDUSTRY APPLICATIONS CONFERENCE. 34TH IAS ANNUAL MEETING. PHOENIX, AZ, OCT. 3 - 7, 1999; [CONFERENCE RECORD OF THE IEEE INDUSTRY APPLICATIONS CONFERENCE. IAS ANNUAL MEETING], NEW YORK, NY : IEEE, US, 3. Oktober 1999 (1999-10-03), Seiten 1964-1971, XP001043069, ISBN: 978-0-7803-5590-3

## Beschreibung

Die vorliegende Erfindung betrifft ein Wandlermodul nach dem Oberbegriff des Anspruchs 1 sowie einen Wechselrichter gemäß dem Oberbegriff des Anspruchs 5.

Wandlermodule sowie Wechselrichter modularen Aufbaus, die derartige Wandlermodule nutzen, sind im Stand der Technik umfänglich bekannt, sodass es hierfür eines gesonderten druckschriftlichen Nachweises dem Grunde nach nicht bedarf. Eine besondere Kategorie von modularen Wechselrichtern sind zum Beispiel Mehrpegelenergiewandler, die häufig in einem Bereich einer Hochspannungs-Gleichspannungsübertragung (HGÜ) eingesetzt werden, wobei die Gleichspannungen im Bereich von mehreren 100 kV, sowie Leistungen in einem Bereich von 1 GW vorgesehen sind. Bei solchen Mehrpegelenergiewandlern erfolgt die Wandlung im Wesentlichen ohne wesentliche Änderung der Spannungspegel, das heißt, dass der Pegel einer maximalen Amplitude der Wechselspannung im Wesentlichen einem halben Pegel einer Gleichspannung an einem Gleichspannungszwischenkreis entspricht.

Gattungsgemäße Mehrpegelenergiewandler weisen in der Regel eine Reihenschaltung aus einer Mehrzahl von Wandlermodulen auf, die ihrerseits einen Wandlermodulkondensator sowie hierzu parallelgeschaltet eine Reihenschaltung aus zwei in Reihe geschalteten Halbleiterschaltern umfassen.
Aufgrund der Schaltungsstruktur ist die Steuerung der Wandlermodule gegenüber alternativen Schaltungskonzepten vergleichsweise betriebssicher, weshalb sich der Mehrpegelenergiewandler besonders für Anwendungen im Bereich der HGÜ eignet. Darüber hinaus benötigt der Mehrpegelenergiewandler mit dem gattungsgemäßen Aufbau am Zwischenkreis keinen Zwischenkreiskondensator, der im Übrigen in einer Anwendung im Bereich HGÜ sehr aufwendig und teuer ausfallen würde. Durch die Wandlermodulkondensatoren wird eine entsprechende Stützung des Gleichspannungszwischenkreises erreicht. Gattungsgemäße Mehrpegelenergiewandler werden in der englischsprachigen Literatur auch Modular Multi Level Converter oder MMC oder auch M2C genannt.

Durch die zunehmende Preisreduktion im Bereich der elektronischen Bauelemente rücken zunehmend auch komplexe Toppologien beziehungsweise Schaltungsstrukturen in den Fokus des leistungselektronischen Massenmarktes. Da die komplexen Schaltungsansätze meist für den Mittel- beziehungsweise Hochspannungsbereich entwickelt worden sind, wurden aufgrund der dort vorherrschenden Randbedingungen viele Anforderungen vergleichsweise umständlich beziehungsweise aufwendig gelöst. Bei einer Übertragung solcher Toppologien beziehungsweise Schaltungsstrukturen in dem Niederspannungsbereich, insbesondere bei kleinen Spannungen im Bereich von 500 V oder weniger, ergibt sich, dass eine Reihe von Anforderungen einfacher und effizienter realisiert werden können. Mehrpegelenergiewandler, insbesondere gattungsgemäße Wechselrichter, die durch solche Mehrpegelenergiewandler gebildet sind, haben sich bei dem Einsatz der vorgenannten Art in der Energietechnik bewährt. Dem Grunde nach können derartige Mehrpegelenergiewandler natürlich auch bei niedrigeren Spannungen realisiert werden. Dadurch kann der Vorteil des sehr hohen Wirkungsgrads, den Mehrpegelenergiewandler bereitstellen können, die geringen Schaltverluste sowie die hohe Zuverlässigkeit im Vergleich zu anderen Energiewandlern genutzt werden.

Auch wenn sich der Einsatz von Mehrpegelenergiewandlern als Wechselrichter dem Grunde nach auch bei Niederspannungen, insbesondere kleineren Niederspannungen, als realisierbar erwiesen hat, so zeigen sich dennoch gerade bei kleinen Spannungen, insbesondere im Bereich der Gleichspannungsseite, eine Reihe von Problemen. Gerade aufgrund der hohen Nutzung regenerativer Energien durch zum Beispiel photovoltaische Anlagen oder dergleichen, ist der Bedarf an zuverlässigen und hochwirksamen Wechselrichtern gestiegen. Zwar kann mit dem Mehrpegelenergiewandler ein hoher Wirkungsgrad und eine hohe Zuverlässigkeit für einen Wechselrichter erreicht werden, jedoch erweist sich die übliche grundlegende Schaltungsstruktur der in Reihe geschalteten Wandlermodule als nachteilig. Insbesondere eignet sich ein solcher Mehrpegelenergiewandler in der Regel nicht dazu, zugleich eine Spannungswandlung von einer niedrigen zwischenkreisseitigen Gleichspannung zu einer hohen Wechselspannung zu ermöglichen, ohne einen zusätzlichen Transformator zu nutzen.

Darüber hinaus wäre es für Wechselrichter in diesem Bereich zweckmäßig, wenn auf einfache Weise eine Anpassung an unterschiedlichste Spannungsversorgungen, insbesondere auf der Gleichspannungsseite, realisiert werden könnte, ohne dass jedes Mal eine neue Struktur entwickelt, geprüft und freigegeben werden müsste.

Der Erfindung liegt somit die Aufgabe zugrunde, einen Wechselrichter bereitzustellen, der die Vorteile eines Mehrpegelenergiewandlers zu nutzen vermag, zugleich jedoch auch bei insbesondere sehr kleinen Zwischenkreisgleichspannungen zuverlässig nutzbar ist.

Als Lösung wird mit der Erfindung ein Wandlermodul gemäß unabhängigem Anspruch 1 vorgeschlagen.

Die vorteilhaften Aspekte der Erfindung werden in den abhängigen Ansprüchen definiert.

Weitere vorteilhafte Ausgestaltungen ergeben sich anhand von Merkmalen der abhängigen Ansprüche.

Bezüglich des Wandlermoduls wird insbesondere vorgeschlagen, dass dieses einen ersten und einen zweiten Modulanschluss aufweist, wobei jeder der Modulanschlüsse einen Pluskontakt, einen Minuskontakt und einen Bezugspotentialkontakt aufweist, wobei das Wandlermodul ferner einen an die Pluskontakte der beiden Modulanschlüsse angeschlossenen ersten Halbleiterschalter zum elektrischen Koppeln der Pluskontakte sowie einen an die Minuskontakte der beiden Modulanschlüsse angeschlossenen zweiten Halbleiterschalter zum elektrischen Koppeln der Minuskontakte sowie ferner eine an die Bezugspotentialkontakte der beiden Modulanschlüsse angeschlossene Induktivität zum elektrischen Koppeln der Bezugspotentialkontakte aufweist. Ferner ist eine erste Reihenschaltung aus einem dritten Halbleiterschalter und einem ersten Kondensator vorgesehen, die zum ersten Halbleiterschalter parallelgeschaltet ist, wobei der erste Kondensator an dem Pluskontakt des ersten Modulanschlusses, der dritte Halbleiterschalter an dem Pluskontakt des zweiten Modulanschlusses und ein Verbindungsanschluss des dritten Halbleiterschalters mit dem ersten Kondensator über einen fünften Halbleiterschalter an dem Bezugspotentialkontakt des ersten Modulanschlusses angeschlossen ist. Ferner ist eine zweite Reihenschaltung aus einem vierten Halbleiterschalter und einem zweiten Kondensator vorgesehen, die zum zweiten Halbleiterschalter parallelgeschaltet ist, wobei der zweite Kondensator an dem Pluskontakt des ersten Modulanschlusses, der vierte Halbleiterschalter an dem Pluskontakt des zweiten Modulanschlusses und ein Verbindungsanschluss des vierten Halbleiterschalters mit dem zweiten Kondensator über einen sechsten Halbleiterschalter an dem Bezugspotentialkontakt des ersten Modulanschlusses angeschlossen ist.

Wechselrichterseitig wird insbesondere vorgeschlagen, dass der Wechselrichter eine Modulaufnahme mit einem Wechselrichtermodulanschluss aufweist, der einen Pluskontakt, einen Minuskontakt und einen Bezugspotentialkontakt aufweist, wobei jeder der Kontakte mittels eines jeweiligen siebten, achten und neunten Halbleiterschalters elektrisch mit dem Phasenkontakt gekoppelt ist, wobei die Modulaufnahme ausgebildet ist, wenigstens ein Wandlermodul gemäß der Erfindung elektrisch anzuschließen, indem der Wechselrichtermodulanschluss den ersten Modulanschluss des wenigstens einen Wandlermoduls und der Gleichspannungsanschluss den zweiten Modulanschluss des wenigstens einen Wandlermoduls elektrisch gekoppelt.

Mittels der Erfindung ist es somit möglich, auf einfache Weise einen Wechselrichter an unterschiedlichste Bedürfnisse individuell anpassen zu können, indem ein entsprechendes Wandlermodul oder eine entsprechende Anzahl von Wandlermodulen in dem Wechselrichter, das heißt, in seiner Modulaufnahme, angeordnet wird. Dabei kann durch das Wandlermodul der Erfindung erreicht werden, dass der Wechselrichter auf einfache Weise eine Spannungstransformation bereitzustellen vermag, bei der eine Amplitude einer durch den Wechselrichter bereitgestellten Wechselspannung größer als eine Gleichspannung am Zwischenkreis des Wechselrichters sein kann. Die Erfindung eignet sich insbesondere für den Bereich der Niederspannung, vorzugsweise im Bereich der regenerativen Energien, bei dem beispielsweise mittels Photovoltaik eine Gleichspannung bereitgestellt wird, die mittels des Wechselrichters in eine Wechselspannung gewandelt werden soll, damit sie zum Beispiel in ein öffentliches Energieversorgungsnetz eingespeist werden kann oder dergleichen.

Als Niederspannung im Sinne der Erfindung ist insbesondere eine Definition gemäß der Richtlinie 2006/95/EG des Europäischen Parlaments und des Rates vom 12. Dezember 2006 zur Angleichung der Rechtsvorschriften der Mitgliedstaaten elektrischer Betriebsmittel zur Verwendung innerhalb bestimmter Spannungsgrenzen zu verstehen. Die Erfindung ist jedoch nicht auf diesen Spannungsbereich begrenzt, sondern kann ebenfalls im Bereich der Mittelspannung eingesetzt werden, die vorzugsweise einen Spannungsbereich von größer als 1 kV bis einschließlich 52 kV umfassen kann. Dem Grunde nach kann die Erfindung natürlich auch im Hochspannungsbereich eingesetzt werden, wobei hier jedoch ein entsprechender Aufwand im Bereich der Wandlermodule vorzusehen ist.

Die erfindungsgemäße Struktur des Wandlermoduls erlaubt es, dies in nahezu beliebiger Weise zu kaskadieren, sodass auf einfache Weise ein Wechselrichter bereitgestellt werden kann, der es erlaubt, die Gleichspannung des Zwischenkreises in eine Wechselspannung mit einer höheren Amplitude zu wandeln. Auch wenn das Wandlungsprinzip im Folgenden lediglich anhand einer einzigen Wechselspannungsphase erläutert wird, dürfte für den Fachmann klar sein, dass für zusätzliche Wechselspannungsphasen, insbesondere zum Bereitstellen eines dreiphasigen Wechselspannungsnetzes, entsprechende Ergänzungen am Wechselrichter vorzusehen sind, die analog zum einphasigen Betrieb für jede Phase ergänzt werden können.

Ein Halbleiterschalter im Sinne dieser Offenbarung ist vorzugsweise ein steuerbares elektronisches Schaltelement, beispielsweise ein steuerbarer elektronischer Halbleiterschalter wie ein Transistor, ein Thyristor, Kombinationsschaltungen hiervon, vorzugsweise mit parallelgeschalteten Freilaufdioden, ein Gate-Turn-off-Thyristor (GTO), ein Isolated-Gate-Bipolar-Transistor (IGBT), Kombinationen hiervon oder dergleichen. Dem Grunde nach kann der Halbleiterschalter auch durch einen Metalloxide-Semiconductor-Field-Effect-Transistor (MOSFET) gebildet sein. Vorzugsweise ist der Halbleiterschalter durch eine Steuereinheit des Wandlermoduls steuerbar.

Halbleiterschalter als Schaltelemente werden im Sinne dieser Offenbarung im Schaltbetrieb betrieben. Der Schaltbetrieb eines Halbleiterschalters bedeutet, dass in einem eingeschalteten Zustand zwischen den die Schaltstrecke bildenden Anschlüssen des Halbleiterschalters ein sehr geringer elektrischer Widerstand bereitgestellt wird, sodass ein hoher Stromfluss bei sehr kleiner Restspannung möglich ist. Im ausgeschalteten Zustand ist die Schaltstrecke des Halbleiterschalters hochohmig, das heißt, sie stellt einen hohen elektrischen Widerstand bereit, sodass auch bei hoher, an der Schaltstrecke anliegender elektrischer Spannung im Wesentlichen kein oder nur ein sehr geringer, insbesondere vernachlässigbarer, Stromfluss vorliegt. Hiervon unterscheidet sich ein Linearbetrieb, der aber bei gattungsgemäßen Wechselrichtern nicht zum Einsatz kommt.

Der Wechselrichter stellt mit der Modulaufnahme eine Anschlussmöglichkeit für das Wandlermodul der Erfindung bereit. Die Anschlussmöglichkeit umfasst den Wechselrichtermodulanschluss sowie eine Kopplungsmöglichkeit mit dem Gleichspannungsanschluss des Wechselrichters. Dadurch kann das in der Modulaufnahme angeordnete Wandlermodul einerseits über den Gleichspannungsanschluss an den Zwischenkreis des Wechselrichters angeschlossen werden und andererseits über eine modulaufnahmeseitige elektronische Schaltung an den Phasenanschluss angeschlossen werden. Die modulaufnahmeseitige Schaltung des Wechselrichters stellt den Wechselrichtermodulanschluss bereit.

Dadurch wird in Verbindung mit dem Wandlermodul eine Schaltungsstruktur geschaffen, die es erlaubt, elektrische Energie, die gleichspannungsseitig bereitgestellt wird, in elektrische Energie zu wandeln, die am Wechselspannungsanschluss bereitgestellt wird und umgekehrt. Der Wechselrichter der Erfindung ist somit nicht nur für eine unidirektionale Energiewandlung geeignet, sondern kann darüber hinaus auch zum Wandeln von Energie in die umgekehrte Richtung, das heißt, für eine bidirektionale Energiewandlung, genutzt werden. Die Halbleiterschalter sind entsprechend anzusteuern. Zu diesem Zweck kann eine übergeordnete Steuerung wechselrichterseitig, zum Beispiel eine Wechselrichtersteuerung, vorgesehen sein, die nicht nur die Halbleiterschalter der Modulaufnahme, das heißt, den siebten, achten und neunten Halbleiterschalter, sondern vorzugsweise auch die Halbleiterschalter des Wandlermoduls beziehungsweise der Wandlermodule zu steuern vermag. Zu diesem Zweck kann eine entsprechende kommunikationstechnische Kopplung zu den Wandlermodulen vorgesehen sein.

Zur Verbindung des Wandlermoduls mit der Modulaufnahme des Wechselrichters kann vorzugsweise eine Steckverbindung vorgesehen sein, die es erlaubt, auf einfache Weise das Wandlermodul mit der Modulaufnahme des Wechselrichters zu verbinden. Vorzugsweise ist lediglich eine einzige Steckverbindung vorgesehen, sodass das Wandlermodul auf einfache Weise in der Modulaufnahme angeordnet werden kann. Vorzugsweise umfasst die Steckverbindung eine Codierung, sodass eine Verpolung vermieden werden kann. Der erste und der zweite Modulanschluss des Wandlermoduls können somit gleichzeitig in der Modulaufnahme angeschlossen werden. Darüber hinaus eignet sich diese Ausgestaltung natürlich auch dazu, Wandlermodule auf einfache Weise austauschen zu können, beispielsweise wenn ein Wandlermodul defekt ist oder der Wartung bedarf oder der Wechselrichter an andere elektrische Anforderungen angepasst werden soll.

Mit dem Wechselrichter der Erfindung in Verbindung mit dem erfindungsgemäßen Wandlermodul ist es auf einfache Weise möglich, eine niedrige Gleichspannung in eine hohe Wechselspannung zu wandeln. Ebenso kann bedarfsweis eine hohe Wechselspannung in eine kleine Gleichspannung gewandelt werden. Dabei kann die Wechselspannung sowohl eine einphasige Wechselspannung als auch eine mehrphasige Wechselspannung, insbesondere eine dreiphasige Wechselspannung, sein. Aufgrund der Schaltungsstruktur des Wandlermoduls und der Modulaufnahme kann wechselspannungsseitig eine Wellenform für die Wechselspannung vorgesehen sein, wie sie auch mit einem Mehrpegelenergiewandler der gattungsgemäßen Art erreichbar ist.

Jedes der Wandlermodule weist sechs Halbleiterschalter, zwei elektrische Kondensatoren sowie eine elektrische Induktivität auf, um die gewünschte Wandlerfunktion realisieren zu können. Durch geeignetes Steuern der Halbleiterschalter ist es möglich, elektrische Spannungen der beiden Kondensatoren in vorgebbarer Weise zu balancieren, sodass eine zuverlässige Wandlungsfunktion erreicht werden kann. Dabei erweist sich die Induktivität als vorteilhaft, um einen Ladestrom für die Kondensatoren zu begrenzen. Die Induktivität braucht lediglich einen kleinen Wert aufzuweisen, um insbesondere Einschaltstromspitzen begrenzen zu können. Gegebenenfalls kann bereits ein Leitungsstück ausreichen.

Modulaufnahmeseitig sind drei Halbleiterschalter vorgesehen, die für den Wechselrichter lediglich pro Phase einmal angeordnet zu werden brauchen.

Mit dem erfindungsgemäßen Wandlermodul ist es möglich, fünf unterschiedliche Spannungspegel mit einem Wandlermodul zu erzeugen. Ist ein mehrphasiger Wechselrichter vorgesehen, bei dem für jede Phase ein einziges Wandlermodul vorgesehen ist, kann bei einer elektrischen Spannung zwischen zwei Phasen eine Auflösung mit neun unterschiedlichen Spannungspegeln erreicht werden.

Das Wandlermodul der Erfindung erzeugt die unterschiedlichen Spannungspegel durch entsprechendes Schalten seiner Halbleiterschalter in Verbindung mit den Halbleiterschaltern der Modulaufnahme. Dies wird weiter unten noch erläutert werden.

Insgesamt kann mit der Erfindung auf einfache Weise ein Wechselrichter bereitgestellt werden, der es erlaubt, eine kleine Gleichspannung in eine hohe Wechselspannung zu wandeln und umgekehrt. Darüber hinaus ermöglicht der Wechselrichter der Erfindung eine einfache Anpassbarkeit und ermöglicht es, kostengünstig große Stückzahlen zu fertigen, insbesondere weil die Modulaufnahme sowie auch die Wandlermodule standardisiert werden können und als separat geprüfte Baugruppen miteinander kombiniert werden können.

Besonders vorteilhaft erweist es sich, wenn das Wandlermodul eine in das Wandlermodul integrierte Steuereinheit zum Steuern der Halbleiterschalter aufweist. Damit ist es möglich, auf einfache Weise eine zuverlässige Steuerung der Halbleiterschalter des Wandlermoduls erreichen zu können. Dies erweist sich insbesondere auch als vorteilhaft, wenn das Wandlermodul einer Prüfung während der Herstellung oder auch während einer Wartung unterzogen werden soll. Auf diese Weise können dem Wandlermodul Steuerbefehle zugeführt werden, die dann in geeignete Schaltfunktionen der Halbleiterschalter umgesetzt werden können. Es ist also nicht erforderlich, jeden einzelnen Halbleiterschalter des Wandlermoduls mit einem eigenen, angepassten Steuersignal zu beaufschlagen. Dadurch kann auch erreicht werden, dass das Wandlermodul besonders störfest konstruiert sein kann, insbesondere weil Steuerleitungen für einzelne Halbleiterschalter sehr kurz ausgebildet sein können.

Besonders vorteilhaft erweist es sich, wenn der erste und der zweite Modulanschluss jeweils einen Steueranschluss aufweisen. Dadurch ist es nämlich möglich, dass lediglich durch Anschließen eines Steuergerätes an den Steueranschluss eine Steuermöglichkeit des Wandlermoduls bereitgestellt wird. Es ist also nicht erforderlich, separate Anschlüsse für die einzelnen Halbleiterschalter vorzusehen. Dadurch können die Montage sowie auch der Herstellungsaufwand reduziert werden. Besonders vorteilhaft erweist es sich, wenn der Steueranschluss in eine Steckverbindung integriert ist, mit der zugleich auch der erste und gegebenenfalls auch der zweite Modulanschluss bereitgestellt werden. Dadurch kann ein Montageaufwand reduziert und die Flexibilität hinsichtlich der Ausgestaltung des Wechselrichters erhöht werden. Auch der Steueranschluss kann nach Art eines Steckverbinders realisiert sein, beispielsweise indem geeignete Steckverbinderelemente am ersten und gegebenenfalls auch am zweiten Modulanschluss vorgesehen werden.

Besonders vorteilhaft erweist es sich, wenn der erste und der zweite Modulanschluss jeweils eine codierte Steckverbindereinheit aufweisen, die zumindest den jeweiligen Pluskontakt, den jeweiligen Minuskontakt, den jeweiligen Bezugspotentialkontakt und optional auch den Steueranschluss umfasst. Für den ersten und den zweiten Modulanschluss können separate Steckverbindereinheiten vorgesehen sein. Besonders vorteilhaft erweist es sich, wenn der erste und der zweite Modulanschluss eine gemeinsame Steckverbindereinheit aufweisen, sodass lediglich eine einzige Steckverbindung durchzuführen ist, um die Verbindung mit der Modulaufnahme herstellen zu können. Ist dagegen vorgesehen, dass die Wandlermodule, wie im Folgenden noch erläutert wird, kaskadiert werden, kann es vorteilhaft sein, für den ersten und den zweiten Modulanschluss separate Steckverbindereinheiten vorzusehen. Die Steckverbindereinheiten können standardisiert sein, sodass die Wandlermodule in nahezu beliebiger Weise miteinander kaskadiert werden können.

Eine Weiterbildung schlägt vor, dass die Modulaufnahme ausgebildet ist, als Wandlermodul eine Kaskade aus wenigstens zwei Wandlermodulen der Erfindung anzuschließen, wobei zum Ausbilden der Kaskade jeweilige erste Modulanschlüsse eines jeweiligen der Wandlermodule mit jeweiligen zweiten der Modulanschlüsse jeweiliger weiterer Wandlermodule elektrisch verbunden sind, wobei die Modulaufnahme ausgebildet ist, den Wechselrichtermodulanschluss mit einem freien ersten Modulanschluss der Kaskade und den Gleichspannungsanschluss mit einem freien zweiten Modulanschluss der Kaskade elektrisch zu koppeln. Dadurch ist es auf einfache Weise möglich, nahezu beliebige Transformationsgrade bezüglich einer Spannungstransformation sowie auch bezüglich einer Auflösung an Spannungspegeln bereitstellen zu können. So kann vorgesehen sein, dass bedarfsweise eine entsprechende Anzahl von Wandlermodulen vorgesehen wird, um eine entsprechend hohe Spannungstransformation realisieren zu können. Darüber hinaus kann auch vorgesehen sein, dass eine Anzahl von Wandlermodulen erhöht wird, wenn eine verbesserte Auflösung bezüglich der Spannungspegel gewünscht ist. Die Erfindung erlaubt es, auf einfache Weise dies zu realisieren, indem lediglich eine entsprechende zusätzliche Anzahl von Wandlermodulen im Wechselrichter vorgesehen wird.

Vorteilhaft weist der Wechselrichter eine Wechselrichtersteuerung auf, die an einem Modulsteueranschluss des Wechselrichtermodulanschlusses angeschlossen ist, wobei der Modulsteueranschluss ausgebildet ist, mit einem Steueranschluss des Wandlermoduls gekoppelt zu werden. Dadurch ist es auf einfache Weise möglich, eine wechselrichterseitige Steuerungsmöglichkeit für das Wandlermodul bereitzustellen. Besonders vorteilhaft sind hierzu entsprechende Steckverbinder vorgesehen, die in die entsprechenden Anschlüsse integriert sein können. Durch Anordnen des Wandlermoduls in der Modulaufnahme kann somit zugleich auch das Wandlermodul steuerungstechnisch angeschlossen werden.

Darüber hinaus kann vorgesehen sein, dass die Wechselrichtersteuerung erkennt, wieviele Wandlermodule in der Modulaufnahme angeordnet sind und welcher Art ein jeweiliges in der Modulaufnahme angeordnetes Wandlermodul ist, um die Steuerung der Wandlermodule, vorzugsweise automatisiert, entsprechend darauf einstellen zu können. So kann vorgesehen sein, dass Wandlermodule für unterschiedliche Leistungen ausgebildet sind, was eine entsprechende Berücksichtigung hinsichtlich der Steuerungsmöglichkeit erfordert. Durch die Wechselrichtersteuerung ist es auf einfache Weise möglich, die Wandlermodule entsprechend zu steuern und so eine zuverlässige Funktion des Wechselrichters bereitzustellen. Dabei kann es sich als vorteilhaft erweisen, wenn bei einer Kaskade von Wandlermodulen die Steueranschlüsse der Wandlermodule ebenfalls kaskadiert sind, sodass lediglich über einen einzigen Steueranschluss ein Steuern sämtlicher Wandlermodule erreicht werden kann.

Weiterhin erweist es sich als vorteilhaft, wenn der neunte Halbleiterschalter zum bidirektionalen elektrischen Trennen des Bezugspotentialkontakts vom Phasenkontakt in einem ausgeschalteten Schaltzustand ausgebildet ist. Dadurch kann eine vollständige Trennung des Bezugspotentialkontakts vom Phasenkontakt erreicht werden. Realisiert werden kann der neunte Halbleiterschalter durch eine Reihenschaltung von antiseriell geschalteten Transistoren, Thyristoren und/oder dergleichen, wie oben bereits diskutiert.

Weitere Vorteile und Merkmale sind der folgenden Beschreibung von Ausführungsbeispielen anhand der Figuren zu entnehmen. In den Figuren bezeichnen gleiche Bezugszeichen gleiche Bauteile und Funktionen.

Es zeigen:
- FIG 1: ein schematisches Prinzipschaltbild für ein Wandlermodul gemäß der Erfindung,
- FIG 2: ein schematisches Prinzipschaltbild für einen Wechselrichter gemäß der Erfindung mit einem Wandlermodul gemäß FIG 1,
- FIG 3: ein schematisches Prinzipschaltbild eines Wechselrichters wie FIG 2, wobei hier eine Anzahl von kaskadierten Wandlermodulen vorgesehen ist,
- FIG 4: ein schematisches Prinzipschaltbild für einen Dreiphasen-Wechselrichter, welcher einphasige Wechselrichter gemäß FIG 3 aufweist,
- FIG 5: der Wechselrichter gemäß FIG 2 in einem ersten Schaltzustand zur Bereitstellung eines ersten Spannungspegels an einem Phasenanschluss,
- FIG 6: eine Darstellung wie FIG 5, jedoch in einem zweiten Schaltzustand zum Bereitstellen eines zweiten Spannungspegels am Phasenanschluss,
- FIG 7: eine Darstellung wie FIG 5 in einem dritten Schaltzustand zum Bereitstellen eines dritten Spannungspegels am Phasenanschluss,
- FIG 8: eine Darstellung wie FIG 5 in einem vierten Schaltzustand zum Bereitstellen eines vierten Spannungspegels am Phasenanschluss,
- FIG 9: eine Darstellung wie FIG 5 in einem fünften Schaltzustand zum Bereitstellen eines fünften Spannungspegels am Phasenanschluss,
- FIG 10: eine schematische Diagrammdarstellung für eine Spannung an einem der Phasenanschlüsse des Wechselrichters gemäß FIG 4,
- FIG 11: eine schematische Diagrammdarstellung einer Phasenspannung zwischen zwei Phasen des Wechselrichters gemäß FIG 4,
- FIG 12: eine schematische Diagrammdarstellung für einen Spannungsbereich eines ersten und eines zweiten Kondensators des Wandlermoduls gemäß FIG 1,
- FIG 13: eine schematische Diagrammdarstellung für einen Modulstrom durch das Wandlermodul gemäß FIG 1, und
- FIG 14: eine schematische Darstellung von Wechselströmen an den jeweiligen Phasenanschlüssen des Wechselrichters gemäß FIG 4.

Im Bereich der erneuerbaren Energien ist es oft erforderlich, eine kleine Gleichspannung in eine hohe nutzbare Wechselspannung umzuwandeln. Im Stand der Technik ist hierzu in der Regel vorgesehen, dass zunächst die kleine Gleichspannung in eine kleine Wechselspannung umgewandelt wird und dann mit einem Transformator transformiert wird, um die zugeführte Wechselspannung in eine hohe Wechselspannung umwandeln zu können. Die Nutzung eines Transformators reduziert den Wirkungsgrad der Schaltung und zugleich die Flexibilität bezüglich eines Anpassens von Spannungspegeln, weil der Transformator in der Regel keine Modularität erlaubt. Für unterschiedliche Verhältnisse von Eingangsspannung und Ausgangsspannung ist es jeweils erforderlich, neue Transformatoren zu konstruieren.

Mit dem erfindungsgemäßen Wechselrichter sowie dem erfindungsgemäßen Wandlermodul wird eine Modularität bereitgestellt, die es erlaubt, auf einfache Weise ein Verhältnis einer Eingangsspannung zu einer Ausgangsspannung abhängig von einer jeweiligen Anwendung anzupassen. Dabei erlaubt es die Erfindung, eine Anpassung sowohl aufgrund der Steuerung des Wechselrichters, insbesondere des Wandlermoduls, zu ermöglichen sowie auch eine weitere Anpassung durch nahezu beliebige Kaskadierung von Wandlermodulen zu ermöglichen. Dies ergibt sich anhand der folgenden Ausführungsbeispiele, zu denen, wie im Folgenden noch ausgeführt werden wird, ebenfalls Simulationen durchgeführt wurden. Insgesamt ergibt sich, dass mit dem Wechselrichter der Erfindung eine Mehrpegelwandlung ermöglicht ist, die geringe Harmonische an einem Phasenanschluss aufweist. Die Anzahl von Spannungspegeln steigt mit der Anzahl der Wandlermodule, die in einem jeweiligen Wechselrichter kaskadiert angeordnet sind. Das ist ein zusätzlicher Vorteil dieses grundsätzlich neuen Schaltungskonzepts.

Das modulare Konzept eines Wechselrichters gemäß der Erfindung ermöglicht es, mögliche Spannungspegel nahezu in beliebiger Weise anzupassen, indem zum Beispiel Wandlermodule hinzugefügt oder entfernt werden und durch Anpassen der jeweiligen Steuerung. Dadurch, dass der erfindungsgemäße Wechselrichter keine hohen Schaltfrequenzen erfordert, um Spannungen von Kondensatoren der Wandlermodule aufrechtzuerhalten, sind entsprechend Schaltverluste gegenüber bekannten Wechselrichterkonzepten gering. Darüber hinaus kann das erfindungsgemäße Schaltungskonzept auf einfache Weise gesteuert werden, um ein internes Spannungs-Balancing zu realisieren.

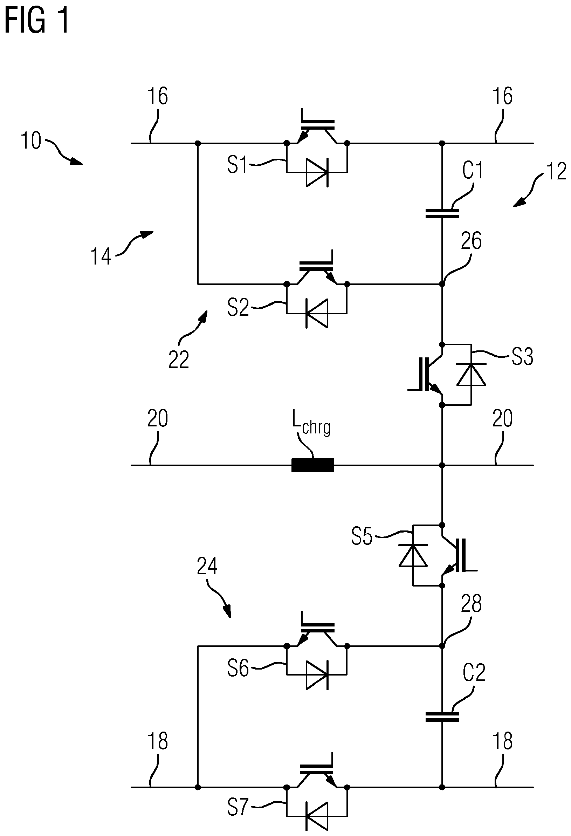

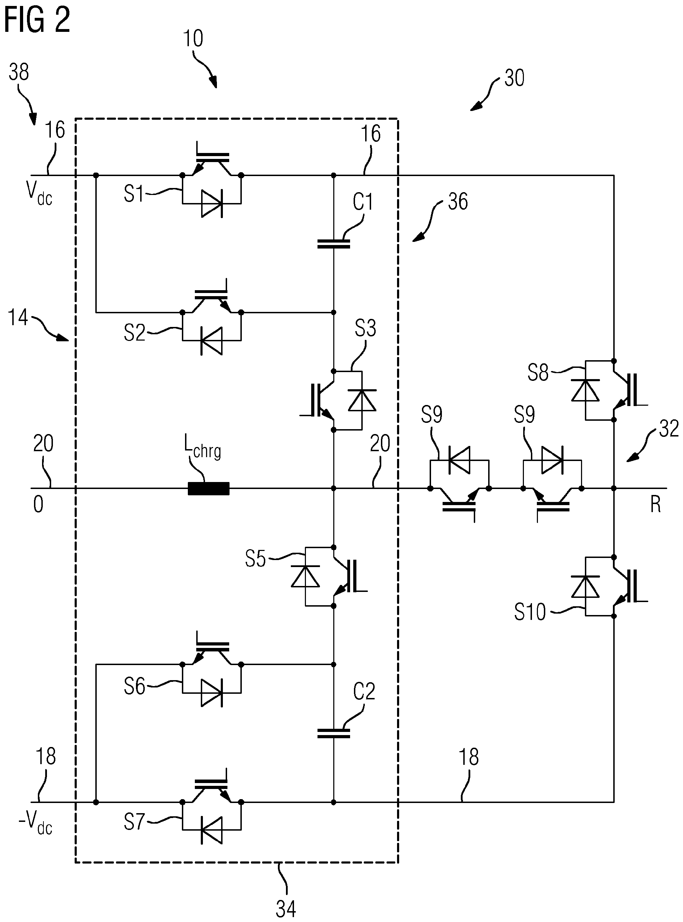

FIG 1 zeigt diesbezüglich in einem schematischen Prinzipschaltbild eine Ausgestaltung für ein Wandlermodul 10 gemäß der Erfindung. Das Wandlermodul 10 ist für einen modular ausgebildeten Wechselrichter 30 (FIG 2) vorgesehen.

Das Wandlermodul 10 umfasst einen ersten und einen zweiten Modulanschluss 12, 14, wobei jeder der Modulanschlüsse 12, 14 jeweils einen Pluskontakt 16, einen Minuskontakt 18 und einen Bezugspotentialkontakt 20 aufweist. An die Pluskontakte 16 der beiden Modulanschlüsse 12, 14 ist ein erster Halbleiterschalter S1 zum elektrischen Koppeln der Pluskontakte 16 angeschlossen. An die Minuskontakte 18 der beiden Modulanschlüsse 12, 14 ist in analoger Weise ein zweiter Halbleiterschalter S7 zum elektrischen Koppeln der Minuskontakte 18 angeschlossen. Weiterhin ist an die Bezugspotentialkontakte 20 der beiden Modulanschlüsse 12, 14 eine Induktivität L_{chrg} zum elektrischen Koppeln der Bezugspotentialkontakte 20 angeschlossen.

Das Wandlermodul 10 umfasst ferner eine erste Reihenschaltung 22 aus einem dritten Halbleiterschalter S2 und einem ersten Kondensator C1, die zum ersten Halbleiterschalter S1 parallelgeschaltet ist. Der erste Kondensator C1 ist an den Pluskontakt 16 des ersten Modulanschlusses 12 und der dritte Halbleiterschalter S2 ist an den Pluskontakt 16 des zweiten Modulanschlusses 14 angeschlossen. Ferner ist ein Verbindungsanschluss 26 des dritten Halbleiterschalters S2 mit dem ersten Kondensator C1 über einen fünften Halbleiterschalter S3 an den Bezugspotentialkontakt 20 des ersten Modulanschlusses 12 angeschlossen.

Aus FIG 1 ist ferner ersichtlich, dass das Wandlermodul 10 eine zweite Reihenschaltung 24 aus einem vierten Halbleiterschalter S6 und einem zweiten Kondensator C2 umfasst, die - analog zur ersten Reihenschaltung 22 - zum zweiten Halbleiterschalter S7 parallelgeschaltet ist. Der zweite Kondensator C2 ist an den Minuskontakt 18 des ersten Modulanschlusses 12, der vierte Halbleiterschalter S6 an den Minuskontakt 18 des zweiten Modulanschlusses 14 und ein Verbindungsanschluss 28 des vierten Halbleiterschalters S6 mit dem zweiten Kondensator C2 über einen sechsten Halbleiterschalter S5 an den Bezugspotentialkontakt 20 des ersten Modulanschlusses 12 angeschlossen. Die zweite Reihenschaltung 24 ist deshalb auch analog zur ersten Reihenschaltung 22 ausgebildet.

Wie sich im Folgenden noch zeigen wird, weist die hier gewählte Schaltungsstruktur des Wandlermoduls 10 besondere Eigenschaften auf, die es erlauben, nicht nur kleine Gleichspannungen in hohe Wechselspannungen zu wandeln, sondern auch eine nahezu beliebige Modularität und Kaskadierung von Wandlermodulen 10 zu ermöglichen.

FIG 2 zeigt in einem schematischen Prinzipschaltbild einen Wechselrichter 30 mit einem Wechselspannungsanschluss 32, der einen Phasenanschluss R und einen nicht weiter dargestellten Nullleiteranschluss aufweist. Der Wechselrichter 30 weist ferner einen Gleichspannungsanschluss 38 auf, der einen Pluskontakt 16, einen Minuskontakt 18 sowie einen Bezugspotentialkontakt 20 aufweist. Der Bezugspotentialkontakt 20 und der Nullleiteranschluss sind elektrisch miteinander gekoppelt, was jedoch in FIG 2 nicht dargestellt ist.

Dem Wechselrichter 30 wird somit eine Gleichspannung als Zwischenkreisgleichspannung zugeführt, die bezüglich des Bezugspotentialkontakts 20 symmetrisch ausgebildet ist, sodass am Pluskontakt 16 betragsmäßig die gleiche elektrische Spannung gegenüber dem Bezugspotentialkontakt 20 anliegt wie bezüglich des Minuskontakts 18 in Bezug auf den Bezugspotentialkontakt 20.

Der Wechselrichter 30 weist ferner eine Modulaufnahme 34 auf, in der vorliegend ein einziges Wandlermodul 10 gemäß FIG 1 angeordnet ist. Die Modulaufnahme 34 weist ferner einen Wechselrichtermodulanschluss 36 mit einem Pluskontakt 16, einem Minuskontakt 18 und einem Bezugspotentialkontakt 20 auf. Jeder der Kontakte 16, 18, 20 des Wechselrichtermodulanschlusses 36 ist mittels eines jeweiligen siebten, achten und neunten Halbleiterschalters S8, S9, S10 elektrisch mit dem Phasenkontakt R gekoppelt.

Die Modulaufnahme 34 ist ausgebildet, das Wandlermodul 10 elektrisch anzuschließen, indem der Wechselrichtermodulanschluss 36 den ersten Modulanschluss 12 des Wandlermoduls 10 und der Gleichspannungsanschluss 38 den zweiten Modulanschluss 14 des Wandlermoduls 10 elektrisch koppelt.

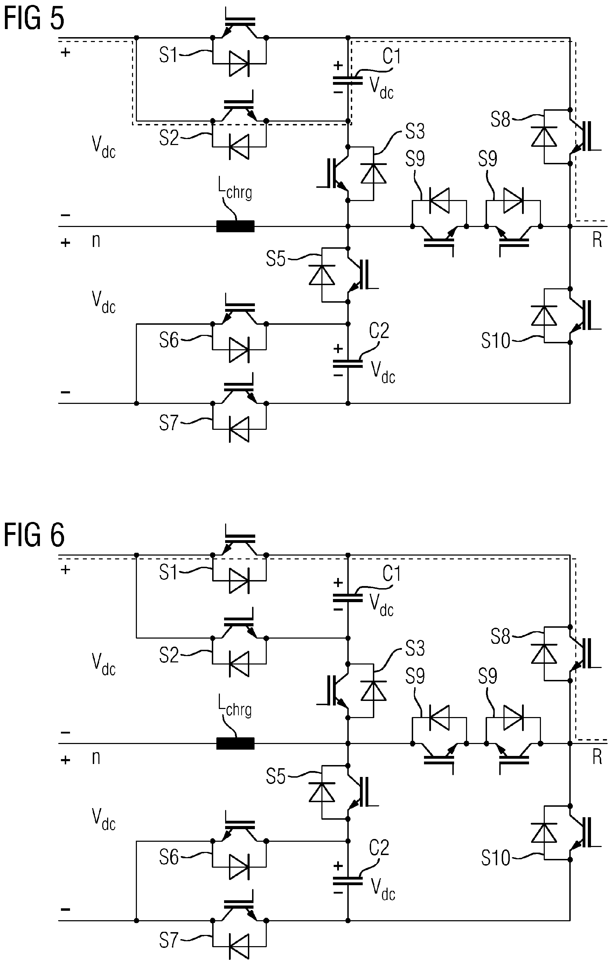

Aufgrund der Konstruktion des Wechselrichters 30 ist es möglich, am Phasenanschluss R eine Wechselspannung bereitzustellen, die fünf unterschiedliche Pegel anzunehmen vermag. Dies wird im Folgenden noch anhand der FIG 5 bis 10 weiter erläutert.

Vorliegend ist vorgesehen, dass als Halbleiterschalter S1 bis S10 IGBTs mit integrierter Freilaufdiode genutzt werden.

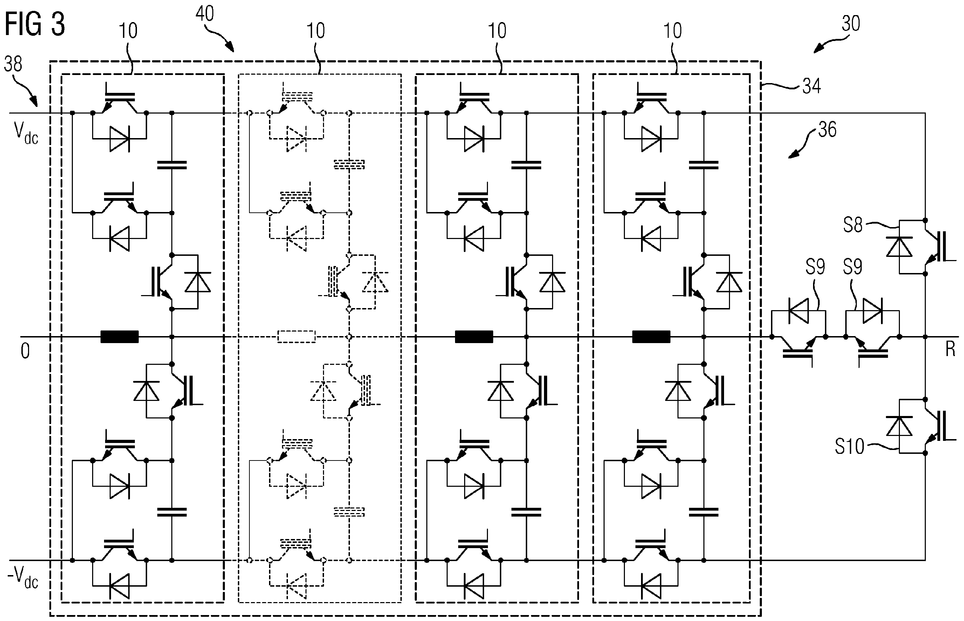

FIG 3 zeigt in einem schematischen Prinzipschaltbild eine weitere Ausgestaltung für den Wechselrichter 30, die dem Grunde nach auf der Ausgestaltung des Wechselrichters 30 gemäß FIG 2 basiert, weshalb ergänzend auf die diesbezüglichen Ausführungen verwiesen wird.

Im Unterschied zur Ausgestaltung gemäß FIG 2 ist bei der Ausgestaltung gemäß FIG 3 vorgesehen, dass die Modulaufnahme 34 des Wechselrichters 30 dazu ausgebildet ist, eine Kaskade 40 aus einer Mehrzahl von Wandlermodulen 10 gemäß FIG 1 elektrisch anzuschließen. Zum Ausbilden der Kaskade 40 sind jeweilige erste Modulanschlüsse 12 der jeweiligen Wandlermodule 10 mit jeweiligen zweiten Modulanschlüssen 14 jeweiliger Wandlermodule 10 elektrisch verbunden, sodass die Kaskade 40 ausgebildet werden kann. Die Modulaufnahme 34 ist ausgebildet, den Wechselrichtermodulanschluss 36 mit einem freien ersten Modulanschluss 12 der Kaskade 40 und den Gleichspannungsanschluss 38 mit einem freien zweiten Modulanschluss 14 der Kaskade 40 elektrisch zu koppeln, wie dies aus FIG 3 ersichtlich ist. Dadurch kann der Wechselrichter 30 nahezu beliebig hinsichtlich seiner Wechselrichterfunktion ergänzt beziehungsweise verändert werden, indem bedarfsweise Wandlermodule 10 vorgesehen werden. Dadurch ist eine einfache Anpassung des Wechselrichters 30 an unterschiedlichste Betriebsanforderungen möglich. Besonders vorteilhaft erweist es sich, wenn die Wandlermodule 10 standardisiert sind, sodass der Wechselrichter 30 bedarfsgerecht mit hoher Flexibilität an spezifische Anwendungen angepasst werden kann, indem entsprechend Wandlermodule 10 in der Modulaufnahme 34 angeordnet werden.

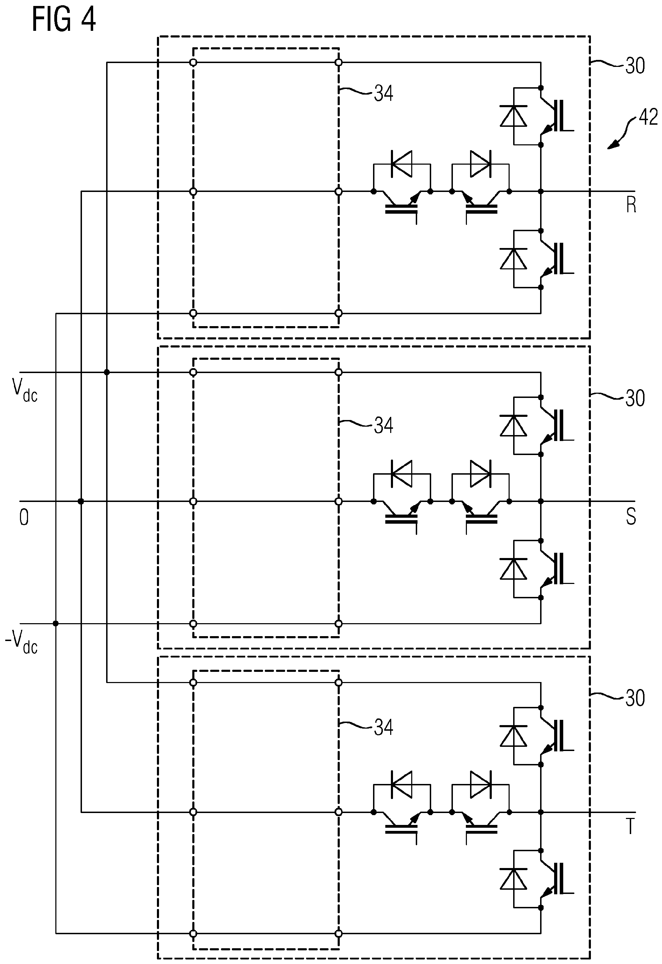

FIG 4 zeigt eine Weiterbildung, die auf dem Wechselrichter gemäß FIG 3 basiert. FIG 4 zeigt eine Ausgestaltung eines Wechselrichters 42, der vorliegend ein Dreiphasen-Wechselrichter ist. Der Wechselrichter 42 weist zu diesem Zweck für jede der drei Phasen einen Wechselrichter 30 gemäß FIG 3 auf. Gleichspannungsseitig sind die Wechselrichter 30 parallelgeschaltet, sodass ihre Gleichspannungsanschlüsse 38 jeweils parallelgeschaltet sind und einen gemeinsamen Zwischenkreis bilden. Wechselspannungsseitig stellt jeder der Wechselrichter 30 eine Phase des Wechselrichters 42 zur Verfügung. Vorzugsweise sind die Phasen R, S, T, die an den jeweiligen Phasenanschlüssen R, S, T bereitgestellt werden, um etwa 120° phasenverschoben.

Im Folgenden wird nun die Funktion eines Wandlermoduls, die dem Wandlermodul 10 gemäß FIG 1 anhand der FIG 5 bis 10 weiter erläutert.

Die relevanten Schaltzustände des Wandlermoduls 1 sind in der folgenden Tabelle dargestellt.

| V_{Rn} (Phasenspannung in Bezug auf einen Mittelpunkt der Gleichspannung bzw. das Bezugspotential) | Kondensator Lade-Balancing Zustand | S1 | S2 | S3 | S5 | S6 | S7 | S8 | S9 | S10 |
|---|---|---|---|---|---|---|---|---|---|---|
| Vdc+Vc | Kein Laden oder Entladen | 0 | 1 | 0 | 0 | X | 0 | 1 | 0 | 0 |
| Vdc (Lade-Balancing für C1) | Laden von C1 | 1 | 0 | 1 | 0 | X | 0 | 1 | 0 | 0 |
| | Kein Laden oder Entladen | 1 | 0 | 0 | 0 | X | 0 | 1 | 0 | 0 |
| | Entladen von C1 | 0 | 0 | 1 | 0 | X | 0 | 1 | 0 | 0 |
| 0 | Kein Laden oder Entladen | 0 | X | 0 | 0 | X | 0 | 0 | 1 | 0 |
| | Laden von C1 | 1 | 0 | 1 | 0 | X | 0 | 0 | 1 | 0 |
| | Laden von C2 | 0 | X | 0 | 1 | 0 | 1 | 0 | 1 | 0 |
| -Vdc | Laden von C2 | 0 | X | 0 | 1 | 0 | 1 | 0 | 0 | 1 |
| (Lade-Balancing für C2) | Kein Laden oder Entladen | 0 | X | 0 | 0 | 0 | 1 | 0 | 0 | 1 |
| | Entladen von C2 | 0 | X | 0 | 1 | 0 | 0 | 0 | 0 | 1 |
| -Vdc-Vc | Kein Laden oder Entladen | 0 | X | 0 | 0 | 1 | 0 | 0 | 0 | 1 |

FIG 5 zeigt einen ersten Schaltzustand, bei dem mittels einer gestrichelten Linie die elektrische Verbindung im Wandlermodul 10 dargestellt ist. Zu diesem Schaltzustand des Wandlermoduls 10 gibt es vorliegend keinen redundanten Schaltzustand. Während dieses Schaltzustands ist der Halbleiterschalter S2 eingeschaltet, sodass die Kathode der Diode des Halbleiterschalters S1 auf das höchste positive Potential gebracht wird, sodass ein Kurzschluss von C1 verhindert ist. In diesem Schaltzustand beträgt der Spannungspegel am Phasenanschluss R etwa +2VDC. Die weiteren Halbleiterschalter sind in diesem Schaltzustand ausgeschaltet.

FIG 6 zeigt einen weiteren Schaltzustand des Wechselrichters 30, für den redundante Schaltzustände für diesen Spannungspegel verfügbar sind (siehe Tabelle). Die redundanten Schaltzustände können genutzt werden, um den Kondensator C1 aufzuladen oder zu entladen. In dem hier dargestellten Schaltzustand ist lediglich der Halbleiterschalter S8 eingeschaltet. Bei dem Halbleiterschalter S1 wird für den eingeschalteten Zustand die integrierte Freilaufdiode genutzt. In diesem Schaltzustand beträgt der Spannungspegel am Phasenanschluss R etwa +VDC. Die weiteren Halbleiterschalter sind in diesem Schaltzustand ausgeschaltet.

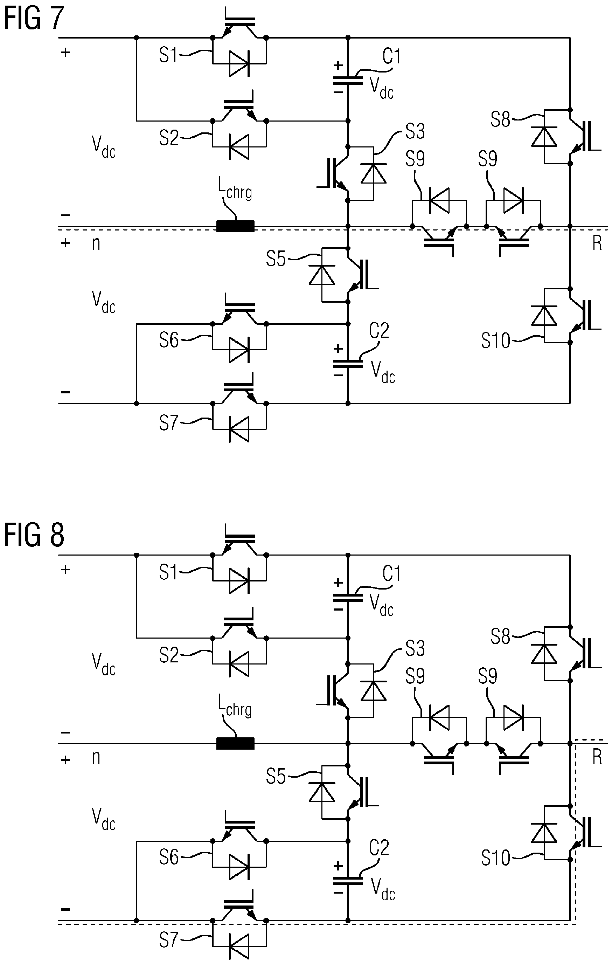

FIG 7 zeigt einen dritten Schaltzustand, für den ebenfalls mehrere redundante Schaltzustände verfügbar sind (vergleiche Tabelle), um die Kondensatoren C1 und C2 entweder aufzuladen oder zu entladen. Vorliegend ist vorgesehen, dass lediglich der Halbleiterschalter S9 eingeschaltet ist. Der Halbleiterschalter S9 ist vorliegend aus einer antiseriellen Reihenschaltung von zwei IGBTs gebildet, die für diesen Zweck gemeinsam geschaltet werden. In diesem Schaltzustand ist der Phasenanschluss R mit dem Bezugspotentialkontakt 20 elektrisch leitend verbunden über den Halbleiterschalter S9. Die Spannung am Phasenanschluss R beträgt deshalb etwa 0 V. Die weiteren Halbleiterschalter sind in diesem Schaltzustand ausgeschaltet.

FIG 8 zeigt einen weiteren Schaltzustand des Wechselrichters 30, bei dem eine am Phasenanschluss R eine elektrische Spannung von -VDC bereitgestellt wird. In diesem Schaltzustand ist der Halbleiterschalter S10 eingeschaltet und nutzt ferner die Freilaufdiode des Halbleiterschalters S7. Die weiteren Halbleiterschalter sind in diesem Schaltzustand ausgeschaltet. Auch hier sind redundante Schaltzustände möglich, die dazu genutzt werden können, um den Kondensator C2 aufzuladen oder zu entladen.

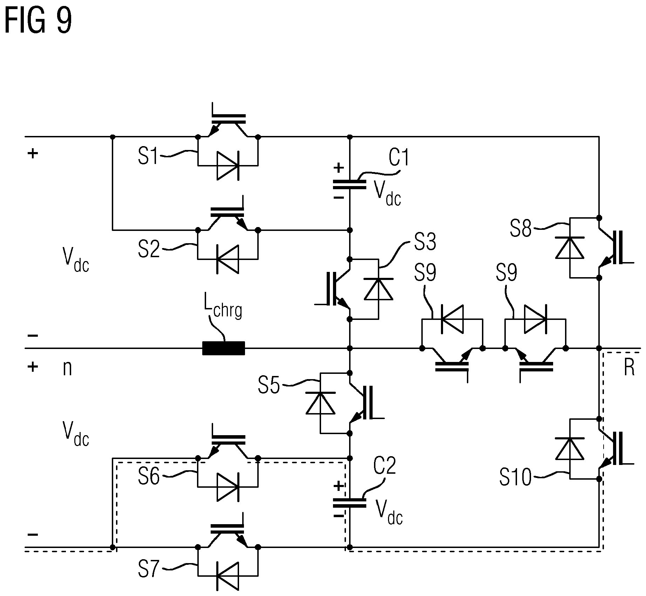

FIG 9 zeigt einen fünften Schaltzustand des Wechselrichters 30, für den kein redundanter Schaltzustand möglich ist. In diesem Schaltzustand wird am Phasenanschluss R eine Spannung von -2VDC bereitgestellt. In diesem Schaltzustand sind die Halbleiterschalter S6 und S10 eingeschaltet. Der Halbleiterschalter S7 ist ausgeschaltet und seine Freilaufdiode aufgrund der Spannungsbeaufschlagung durch den zweiten Kondensator C2 in Sperrrichtung gepolt. Die weiteren Halbleiterschalter sind in diesem Schaltzustand ausgeschaltet.

Die entsprechenden Schaltzustände sind auch in der obigen Tabelle dargestellt und zu entnehmen und können dazu dienen aufzuzeigen, unter welchen Bedingungen der erste und der zweite Kondensator C1, C2 aufgeladen oder entladen werden können. Entsprechend können die Schaltzustände gewählt werden.

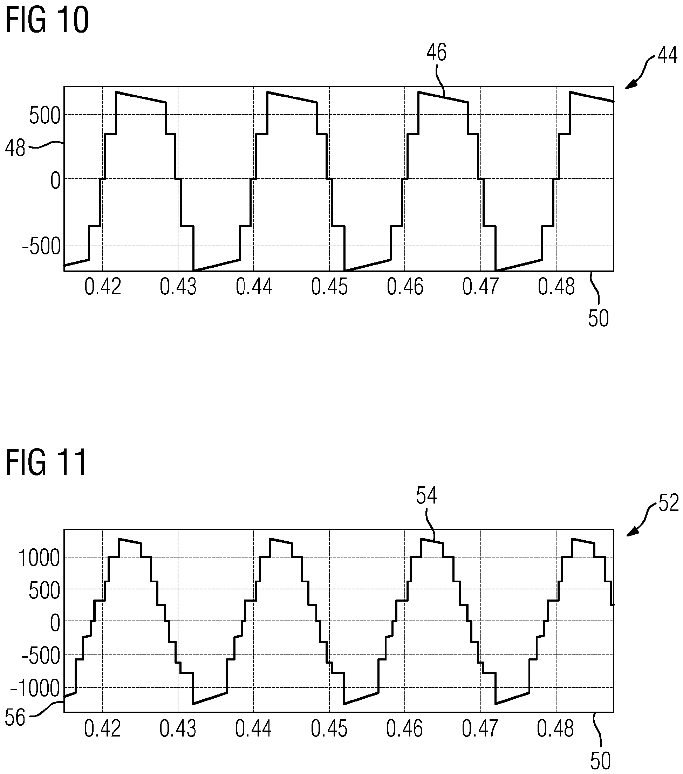

FIG 10 zeigt in einem schematischen Diagramm 44 einen Spannungsverlauf am Phasenanschluss R des Wechselrichters 42 gemäß FIG 4 gegenüber dem Nullleiter. Eine Abszisse 50 ist eine Zeitachse, die die Zeit in Sekunden darstellt. Eine Ordinate 48 ist eine Spannungsachse, die die elektrische Spannung am Phasenanschluss R gegenüber dem Nullleiter in Volt angibt. Mit einem Graphen 46 ist der Spannungsverlauf am Phasenanschluss R dargestellt. Aus FIG 10 ist ersichtlich, dass die Spannung fünf Pegel, wie zuvor anhand der FIG 5 bis 9 erläutert, nacheinander abwechselnd einnimmt. Dadurch wird eine Wechselspannung am Phasenanschluss R bereitgestellt, die lediglich eine geringe Verzerrung gegenüber einer sinusförmigen Wechselspannung aufweist. Mit geringen Filtermaßnahmen kann hier eine Filterung vorgenommen werden, falls es erforderlich sein sollte.

Soll die Genauigkeit erhöht werden, kann anstelle eines einzelnen Wandlermoduls 10 im Wechselrichter 30 auch eine Kaskade 40 im Wechselrichter 30 angeordnet sein. Entsprechend der Anzahl der Wandlermodule 10 erhöht sich dann die Auflösung.

FIG 11 zeigt ein schematisches Diagramm 52, bei welchem die Abszisse ebenfalls die Zeitachse 50 ist. Eine Ordinate 56 ist eine Spannungsachse, die eine Phasenspannung zwischen zwei Phasen, und zwar zwischen den Phasenanschlüssen R und dem Phasenanschluss S des Wechselrichters 42 gemäß FIG 4 darstellt, wobei der Wechselrichter 42 in dieser Ausgestaltung lediglich ein einziges Wandlermodul 10 für jede der Phasen aufweist. Die Spannung ist in V angegeben. Mit einem Graphen 54 ist der Spannungsverlauf dargestellt. Aus FIG 11 ist ersichtlich, dass hier nun neun Stufen zur Verfügung stehen. Die Wechselspannung zwischen zwei Phasen ist dadurch erheblich feiner aufgelöst.

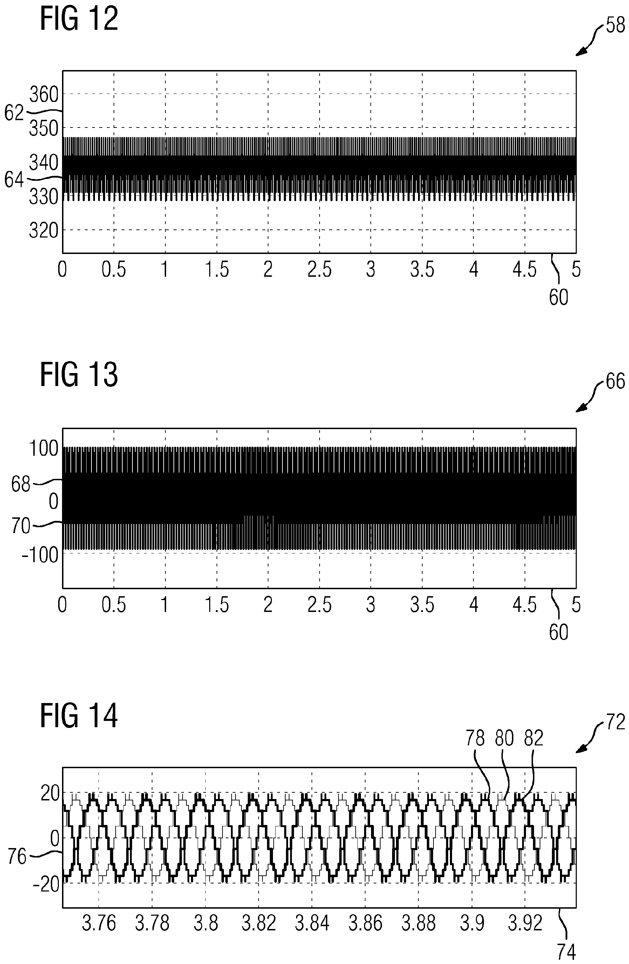

FIG 12 zeigt in einem schematischen Spannungszeitdiagramm 58 eine Kondensatorspannung eines der beiden Kondensatoren C1, C2 des Wandlermoduls 10 im bestimmungsgemäßen Betrieb. Die Darstellung ist für die beiden Kondensatoren im Wesentlichen etwa gleich. Es ist eine Zeitachse 60 vorgesehen, die eine Zeit in s angibt. Ferner ist eine Spannungsachse 62 als Ordinate vorgesehen, in der die Spannung in V wiedergegeben ist. Mit einem Graphen 64 ist ein Spannungsband angegeben, welches einen Spannungsbereich wiedergibt, der einer Kondensatorspannung des ersten Kondensators C1 beziehungsweise des zweiten Kondensators C2 entspricht. Aus FIG 12 ist ersichtlich, dass die Kondensatorspannung am ersten Kondensator C1 beziehungsweise am zweiten Kondensator C2 in einem Bereich von etwa 330 V bis etwa knapp 350 V liegt.

FIG 13 zeigt in einem weiteren schematischen Diagramm 66 einen Strom, der durch den ersten Kondensator C1 beziehungsweise den zweiten Kondensator C2 und die entsprechenden Halbleiterschalter fließt. Das Diagramm 66 weist als Abszisse wieder die Zeitachse 60 auf. Eine Ordinate 68 ist einem Modulstrom des Wandlermoduls 10 zugeordnet, der in A angegeben ist. Mit einem Graphen 70 ist ein Bereich für einen Stromfluss durch den ersten Kondensator C1 beziehungsweise den zweiten Kondensator C2 und die entsprechenden Halbleiterschalter dargestellt. Der Strom kann zwischen -100 A und +100 A betragen.

FIG 14 zeigt in einem weiteren schematischen Diagramm 72 einen Stromverlauf an den Phasenanschlüssen R, S, T des Wechselrichters 42 gemäß FIG 4. Das Diagramm 72 weist eine Abszisse 74 auf, die eine Zeitachse ist und die Zeit in s darstellt. Eine Ordinate 76 ist einem Phasenstrom einer jeweiligen Phase R, S, T zugeordnet und gibt den Strom in A wieder. Aus dem Diagramm 72 sind drei Graphen ersichtlich, nämlich ein erster Graph 78, der einem Strom des Phasenanschlusses R zugeordnet ist, ein Graph 80, der einem Strom des Phasenanschlusses S zugeordnet ist, und ein Graph 82, der einem Strom des Phasenanschlusses T zugeordnet ist. Zu erkennen ist, dass die Phasenströme, die mit den Graphen 78, 80, 82 dargestellt sind, jeweils um etwa 120° verschoben sind.

Die Ausführungsbeispiele dienen lediglich der Erläuterung der Erfindung und sind für diese nicht beschränkend. Natürlich können Funktionen, insbesondere auch Ausgestaltungen in Bezug auf den Wechselrichter beziehungsweise das Wandlermodul beliebig gestaltet sein, ohne den Gedanken der Erfindung zu verlassen. So können zum Beispiel die Halbleiterschalter in dualer Form sowohl als NPN-Transistor als auch als PNP-Transistor ausgebildet sein.

Darüber hinaus brauchen die Halbleiterschalter nicht nur als IGBT's ausgebildet zu sein, sondern sie können gleichermaßen auch als MOSFET ausgebildet sein. Darüber hinaus können natürlich auch weitere Schaltelemente sowie Kombinationsschaltungen hiervon vorgesehen sein, beispielsweise unter Nutzung von Thyristoren oder dergleichen. Gegebenenfalls ist eine Schaltungsstruktur in dualer Weise fachmännisch anzupassen.

Schließlich ist anzumerken, dass die für das Wandlermodul angegebenen Wirkungen, Vorteile und Merkmale gleichermaßen für den mit dem Wandlermodul ausgerüsteten Wechselrichter gelten und umgekehrt.

## Patentansprüche

1. Wandlermodul (10) für einen modular ausgebildeten Wechselrichter (30), wobei das Wandlermodul umfasst:
- einen ersten und einen zweiten Modulanschluss (12, 14), wobei jeder der Modulanschlüsse (12, 14) einen Pluskontakt (16), einen Minuskontakt (18) und einen Bezugspotentialkontakt (20) aufweist,
**gekennzeichnet durch**:
- einen an die Pluskontakte (16) der beiden Modulanschlüsse (12, 14) angeschlossenen ersten Halbleiterschalter (S1) zum elektrischen Koppeln der Pluskontakte (16),
- einen an die Minuskontakte (18) der beiden Modulanschlüsse (12, 14) angeschlossenen zweiten Halbleiterschalter (S7) zum elektrischen Koppeln der Minuskontakte (18),
- eine an die Bezugspotentialkontakte (20) der beiden Modulanschlüsse (12, 14) angeschlossene Induktivität (L_{chrg}) zum elektrischen Koppeln der Bezugspotentialkontakte (20),
- eine erste Reihenschaltung (22) aus einem dritten Halbleiterschalter (S2) und einem ersten Kondensator (C1), die zum ersten Halbleiterschalter (S1) parallelgeschaltet ist, wobei der erste Kondensator (C1) an den Pluskontakt (16) des ersten Modulanschlusses (12), der dritte Halbleiterschalter (S2) an den Pluskontakt (16) des zweiten Modulanschlusses (14) und ein Verbindungsanschluss (26) des dritten Halbleiterschalters (S2) mit dem ersten Kondensator (C1) über einen fünften Halbleiterschalter (S3) an den Bezugspotentialkontakt (20) des ersten Modulanschlusses (12) anschlossen ist, und
- eine zweite Reihenschaltung (24) aus einem vierten Halbleiterschalter (S6) und einem zweiten Kondensator (C2), die zum zweiten Halbleiterschalter (S7) parallelgeschaltet ist, wobei der zweite Kondensator (C2) an den Minuskontakt (18) des ersten Modulanschlusses (12), der vierte Halbleiterschalter (S6) an den Minuskontakt (18) des zweiten Modulanschlusses (14) und ein Verbindungsanschluss (28) des vierten Halbleiterschalters (S6) mit dem zweiten Kondensator (C2) über einen sechsten Halbleiterschalter (S5) an den Bezugspotentialkontakt (20) des ersten Modulanschlusses (12) anschlossen ist.

2. Wandlermodul nach Anspruch 1,
**gekennzeichnet durch**
eine in das Wandlermodul (10) integrierte Steuereinheit zum Steuern der Halbleiterschalter (S1, S2, S3, S5, S6, S7).

3. Wandlermodul nach Anspruch 1 oder 2,
**dadurch gekennzeichnet, dass**
der erste und der zweite Modulanschluss (12, 14) jeweils einen Steueranschluss aufweisen.

4. Wandlermodul nach einem der vorhergehenden Ansprüche,
**dadurch gekennzeichnet, dass**
der erste und der zweite Modulanschluss (12, 14) jeweils eine kodierte Steckverbindereinheit aufweisen, die zumindest den jeweiligen Pluskontakt (16), den jeweiligen Minuskontakt (18), den jeweiligen Bezugspotentialkontakt (20) und optional den Steueranschluss umfasst.

5. Wechselrichter (30) mit
- wenigstens einem Wechselspannungsanschluss (32), der einen Phasenanschluss (R) und einen Nullleiteranschluss aufweist, sowie
- einem Gleichspannungsanschluss (38), der einen Pluskontakt (16), einen Minuskontakt (18) sowie einen Bezugspotentialkontakt (20) aufweist,
- wobei der Bezugspotentialkontakt (20) und der Nullleiteranschluss elektrisch miteinander gekoppelt sind, **gekennzeichnet durch**
- eine Modulaufnahme (34) mit einem Wechselrichtermodulanschluss (36), der einen Pluskontakt (16), einen Minuskontakt (18) und einen Bezugspotentialkontakt (20) aufweist, wobei jeder der Kontakte (16, 18, 20) mittels eines jeweiligen siebten, achten und neunten Halbleiterschalters (S8, S9, S10) elektrisch mit dem Phasenkontakt (R) gekoppelt ist,
- wobei die Modulaufnahme (34) ausgebildet ist, wenigstens ein Wandlermodul (10) nach einem der vorhergehenden Ansprüche elektrisch anzuschließen, indem der Wechselrichtermodulanschluss (36) den ersten Modulanschluss (12) des wenigstens einen Wandlermoduls (10) und der Gleichspannungsanschluss (38) den zweiten Modulanschluss (14) des wenigstens einen Wandlermoduls (10) elektrisch koppelt.

6. Wechselrichter nach Anspruch 5,
**dadurch gekennzeichnet, dass**
die Modulaufnahme (34) ausgebildet ist, als Wandlermodul (10) eine Kaskade (40) aus wenigstens zwei Wandlermodulen (10) nach einem der Ansprüche 1 bis 4 elektrisch anzuschließen, wobei zum Ausbilden der Kaskade (40) jeweilige erste Modulanschlüsse (12) eines jeweiligen der Wandlermodule (10) mit jeweiligen zweiten Modulanschlüssen (14) jeweiliger weiterer Wandlermodule (10) elektrisch verbunden sind, wobei die Modulaufnahme (34) ausgebildet ist, den Wechselrichtermodulanschluss (36) mit einem freien ersten Modulschluss (12) der Kaskade (40) und den Gleichspannungsanschluss (38) mit einen freiem zweiten Modulschluss (14) der Kaskade (40) elektrisch zu koppeln.

7. Wechselrichter nach Anspruch 5 oder 6,
**gekennzeichnet durch**
eine Wechselrichtersteuerung, die an einen Modulsteueranschluss des Wechselrichtermodulanschlusses angeschlossen ist, wobei der Modulsteueranschluss ausgebildet ist, mit einem Steueranschluss des Wandlermoduls (10) gekoppelt zu werden.

8. Wechselrichter nach einem der Ansprüche 5 bis 7,
**dadurch gekennzeichnet, dass**
der neunte Halbleiterschalter (S9) zum bidirektionalen elektrischen Trennen des Bezugspotentialkontakts (20) vom Phasenkontakt (R) in einem ausgeschalteten Schaltzustand ausgebildet ist.

## Claims

1. Converter module (10) for a modularly configured inverter (30), wherein the converter module comprises:
- a first and a second module terminal (12, 14), wherein each of the module terminals (12, 14) has a positive contact (16), a negative contact (18), and a reference potential contact (20), **characterized by**:
- a first semiconductor switch (S1) which is connected to the positive contacts (16) of the two module terminals (12, 14) for electrically coupling the positive contacts (16),
- a second semiconductor switch (S7) which is connected to the negative contacts (18) of the two module terminals (12, 14) for electrically coupling the negative contacts (18),
- an inductor (L_{chrg}) which is connected to the reference potential contacts (20) of the two module terminals (12, 14) for electrically coupling the reference potential contacts (20),
- a first series circuit (22) which is made up of a third semiconductor switch (S2) and a first capacitor (C1) and which is connected in parallel with the first semiconductor switch (S1), wherein the first capacitor (C1) is connected to the positive contact (16) of the first module terminal (12), the third semiconductor switch (S2) is connected to the positive contact (16) of the second module terminal (14), and a connection (26) of the third semiconductor switch (S2) to the first capacitor (C1) is connected to the reference potential contact (20) of the first module terminal (12) via a fifth semiconductor switch (S3), and
- a second series circuit (24) made up of a fourth semiconductor switch (S6) and a second capacitor (C2), which is connected in parallel with the second semiconductor switch (S7), wherein the second capacitor (C2) is connected to the negative contact (18) of the first module terminal (12), the fourth semiconductor switch (S6) is connected to the negative contact (18) of the second module terminal (14), and a connection (28) of the fourth semiconductor switch (S6) to the second capacitor (C2) is connected to the reference potential contact (20) of the first module terminal (12) via a sixth semiconductor switch (S5).

2. Converter module according to Claim 1,
**characterized by**
a control unit which is integrated into the converter module (10) for controlling the semiconductor switches (S1, S2, S3, S5, S6, S7).

3. Converter module according to Claim 1 or 2,
**characterized in that**
the first and the second module terminal (12, 14) respectively have a control terminal.

4. Converter module according to one of the preceding claims,
**characterized in that**
the first and the second module terminal (12, 14) respectively include a coded plug connector unit which comprises at least the respective positive contact (16), the respective negative contact (18), the respective reference potential contact (20), and optionally the control terminal.

5. Inverter (30) comprising
- at least one AC-voltage terminal (32) which has a phase terminal (R) and a neutral conductor terminal, and
- a DC-voltage terminal (38) which has a positive contact (16), a negative contact (18), and a reference potential contact (20),
- wherein the reference potential contact (20) and the neutral conductor terminal are electrically coupled to one another, **characterized by**
- a module receptacle (34) including an inverter module terminal (36) which has a positive contact (16), a negative contact (18), and a reference potential contact (20), wherein each of the contacts (16, 18, 20) is electrically coupled to the phase contact (R) by means of a respective seventh, eighth, and ninth semiconductor switch (S8, S9, S10),
- wherein the module receptacle (34) is configured to electrically connect at least one converter module (10) according to one of the preceding claims, in that the inverter module terminal (36) electrically couples the first module terminal (12) of the at least one converter module (10), and the DC-voltage terminal (38) electrically couples the second module terminal (14) of the at least one converter module (10).

6. Inverter according to Claim 5,
**characterized in that**
the module receptacle (34) is configured as a converter module (10) to electrically connect a cascade (40) made up of at least two converter modules (10) according to one of Claims 1 to 4, wherein for configuring the cascade (40), respective first module terminals (12) of a respective one of the converter modules (10) are electrically connected to respective second module terminals (14) of respective additional converter modules (10), wherein the module receptacle (34) is configured to electrically couple the inverter module terminal (36) to a free first module terminal (12) of the cascade (40), and to electrically couple the DC-voltage terminal (38) to a free second module terminal (14) of the cascade (40).

7. Inverter according to Claim 5 or 6,
**characterized by**
an inverter controller which is connected to a module control terminal of the inverter module terminal, wherein the module control terminal is configured to be coupled to a control terminal of the converter module (10).

8. Inverter according to one of Claims 5 to 7,
**characterized in that**
the ninth semiconductor switch (S9) is configured for the bidirectional electrical disconnection of the reference potential contact (20) from the phase contact (R) in a deactivated switching state.

## Revendications

1. Module (10) de convertisseur pour un onduleur (30) de constitution modulaire, le module de convertisseur comprenant :
- une première et une deuxième bornes (12, 14) de module, chacune des bornes (12, 14) de module ayant un contact (16) plus, un contact (18) moins et un contact (20) de potentiel de référence,
**caractérisé par** :
- un premier interrupteur (S1) à semi-conducteur, connecté aux contacts (16) plus des deux bornes (12, 14) de module, afin de connecter électriquement les contacts (16) plus,
- un deuxième interrupteur (S7) à semi-conducteur, connecté aux contacts (18) moins des deux bornes (12, 14) du module, afin de connecter électriquement les contacts (18) moins,
- une inductance (L_{chrg}), connectée aux contacts (20) de potentiel de référence des deux bornes (12, 14) de module, afin de connecter électriquement les contacts (20) de potentiel de référence,
- un premier circuit (22) série, qui est composé d'un troisième interrupteur (S2) à semi-conducteur et d'un premier condensateur (C1), et qui est monté en parallèle au premier interrupteur (S1) à semi-conducteur, le premier condensateur (C1 ) étant connecté au contact (16) plus de la première borne (12) du module, le troisième interrupteur (S2) à semi-conducteur au contact (16) plus de la deuxième borne (14) du module et une borne (26) de liaison du troisième interrupteur (S2) à semi-conducteur étant, par le premier condensateur (C1), par l'intermédiaire d'un cinquième interrupteur (S3) à semi-conducteur, connectée au contact (20) de potentiel de référence de la première borne (12) du module, et
- un deuxième circuit (24) série, qui est composé d'un quatrième interrupteur (S6) à semi-conducteur et d'un deuxième condensateur (C2) et qui est monté en parallèle au deuxième interrupteur (S7) à semi-conducteur, le deuxième condensateur (C2) étant connecté au contact (18) moins de la première borne (12) du module, le quatrième interrupteur (S6) à semi-conducteur au contact (18) moins de la deuxième borne (14) du module et une borne (28) de liaison du quatrième interrupteur (S6) à semi-conducteur étant, par le deuxième condensateur (C2) par l'intermédiaire d'un sixième interrupteur (S5) à semi-conducteur, connectée au contact de potentiel de référence de la première borne (12) du module.

2. Module de convertisseur suivant la revendication 1,
**caractérisé par**
une unité de commande intégrée au module (10) de convertisseur pour commander les interrupteurs (S1, S2, S3, S5, S6, S7) à semi-conducteur.

3. Module de convertisseur suivant la revendication 1 ou 2,
**caractérisé en ce que**
la première et la deuxième bornes (12, 14) du module ont chacune une borne de commande.

4. Module de convertisseur suivant l'une des revendications précédentes,
**caractérisé en ce que**
la première et la deuxième bornes (12, 14) du module ont chacune une unité codée de connecteur à enfichage, qui comprend au moins le contact (16) plus respectif, le contact (18) moins respectif, le contact (20) respectif de potentiel de référence et, éventuellement, la borne de commande.

5. Onduleur (30), comprenant
- au moins une borne (32) de tension alternative, qui a une borne (R) de phase et une borne de conducteur neutre,
ainsi que
- une borne (38) de tension continue, qui a un contact (16) plus, un contact (18) moins, ainsi qu'un contact (20) de potentiel de référence,
- dans lequel le contact (20) de potentiel de référence et le contact de conducteur neutre sont connectés électriquement entre eux,
**caractérisé par**
- un logement (34) de module, ayant une borne (36) de module d'onduleur, qui a un contact (16) plus, un contact (18) moins et un contact (20) de potentiel de référence, chacun des contacts (16, 18, 20) étant connecté électriquement au contact (R) de phase au moyen d'un septième, huitième et neuvième interrupteurs (S8, S9, S10) à semi-conducteur respectif,
- dans lequel le logement (34) de module est constitué pour connecter électriquement au moins un module (10) de convertisseur suivant l'une des revendications précédentes, par le fait que la borne (36) du module d'onduleur connecte électriquement la première borne (12) du au moins un module (10) de convertisseur et la borne (38) de tension continue connecte électriquement la deuxième borne (14) de module du au moins un module (10) de convertisseur.

6. Onduleur suivant la revendication 5,
**caractérisé en ce que**
le logement (34) de module est constitué pour connecter électriquement, comme module (10) de convertisseur, une cascade (40), composée d'au moins deux modules (10) de convertisseur suivant l'une des revendications 1 à 4, dans lequel, pour constituer la cascade, respectivement, des premières bornes (12) de module de l'un, respectivement, des modules (10) de convertisseur, sont connectées électriquement à, respectivement, des deuxièmes bornes (14) de module de, respectivement un autre module (10) de convertisseur, le logement (34) de module étant constitué pour connecter électriquement la borne (36) de module d'onduleur à une première borne (12) libre de module de la cascade (40) et la borne (38) de tension continue à une deuxième borne (14) libre de module de la cascade (40).

7. Module de convertisseur suivant la revendication 5 ou 6,
**caractérisé par**
une commande d'onduleur, qui est connectée à une borne de commande de module de la borne de module de convertisseur, la borne de commande de module étant constituée pour être connectée à une borne de commande du module (10) de convertisseur.

8. Module de convertisseur suivant l'une des revendications 5 à 7,
**caractérisé en ce que**
le neuvième interrupteur (S9) à semi-conducteur est constitué pour séparer électriquement, de manière bidirectionnelle, le contact (20) de potentiel de référence du contact (R) de phase dans un état de commutation ouvert.
